# EUROPÄISCHE PATENTSCHRIFT

(11) **EP 2 340 377 B1**
(45) Veröffentlichungstag und Bekanntmachung des Hinweises auf die Patenterteilung: **27.02.2013**
(21) Anmeldenummer: 09764827.3
(22) Anmeldetag: 04.12.2009
(51) Int. Cl.: F16D 65/12

(54) **BREMSSCHEIBENANORDNUNG FÜR SCHEIBENBREMSEN**
BRAKE DISC ARRANGEMENT FOR DISC BRAKES
AGENCEMENT DE DISQUE DE FREIN POUR FREINS À DISQUE

(30) Priorität: 04.12.2008 DE 102008044339
(43) Veröffentlichungstag der Anmeldung: 06.07.2011
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner
(86) Internationale Anmeldenummer: PCT/EP2009/066416
(87) Internationale Veröffentlichungsnummer: WO 2010/063831

(56) Entgegenhaltungen:
- EP-A- 1 227 261
- EP-A- 1 972 823
- DE-A1- 10 322 454
- DE-A1-102004 008 958
- GB-A- 1 032 923
- US-A- 4 026 393

## Beschreibung

Die vorliegende Erfindung betrifft eine Bremsscheibenanordnung für Scheibenbremsen, beispielsweise von Landfahrzeugen (wie Personenkraftwagen, Lastkraftwagen, Nutzfahrzeugen oder Anhängern) sowie ein Verfahren zur Herstellung einer Bremsscheibenanordnung für Scheibenbremsen, ebenfalls insbesondere für Landfahrzeuge.

Bremsscheibenanordnungen der in Rede stehenden Art sind aus dem Stand der Technik bekannt. So offenbart beispielsweise die DE 199 29 390 eine Bremsscheibenanordnung für Scheibenbremsen, bei welcher ein Reibring auf einen verzahnten Adapter gegossen wird, sodass sich die Bremsscheibe radial ausdehnen kann und somit ein Aufschirmen der Scheibe vermieden wird, welches aufgrund der unterschiedlichen Spannungsverteilung zu einem Reißen der Scheibe führen kann. Problematisch bei derartigen Anordnungen ist jedoch, dass der Fertigungsaufwand sehr hoch ist, da ein Stanzentgratungsprozess notwendig ist. Darüber hinaus ist die bekannte Bremsscheibenanordnung gießtechnisch sehr komplex, da die Bremsscheibenanordnung aufgrund der verschiedenen Gussarten der Elemente in zwei verschiedenen Gießereien hergestellt werden müssen, was zu Kompetenzproblemen und zu einer aufwändigen Logistik führt.

US-4,026,393, EP 1 227 261 A2 und DE 10 322 454 A1 betreffen eine mehrteilige Bremsscheibe bestehend aus einem Reibring und einem Anbindungsadapter, wobei diese über Zwischenelemente miteinander verbunden sind.

GB 1,032,923 offenbart eine Fahrzeugbremse bestehend aus einer Bremsscheibe und einem Anbindungsadapter, welcher einen Vorsprung aufweist, der in die Bremsscheibe hineinragt.

Die EP 1 972 823 A1 zeigt eine Scheibenbremse bestehend aus einem Reibring und einem Anbindungsadapter, wobei der Reibring integral ausgebildete Verbindungsstege aufweist, die in den Anbindungsadapter hineinragen.

Die DE 10 2004 008 958 A1 zeigt ein Verfahren zur Herstellung einer Bremsscheibe mit einem Reibring, einem Anbindungsadapter und Verbindungselementen zur Verbindung derselben, so dass eine temperaturbedingte, radiale Ausdehnung des Reibrings zugelassen ist.

Es ist somit Aufgabe der vorliegenden Erfindung, eine Bremsscheibenanordnung für Scheibenbremsen, insbesondere für Landfahrzeuge, sowie ein Verfahren zur Herstellung einer Bremsscheibenanordnung für Scheibenbremsen, insbesondere für Landfahrzeuge, vorzusehen, mittels welchen die Betriebssicherheit der Bremsscheibenanordnung verbessert und der Produktionsprozess vereinfacht sowie die Produktionskosten verringert werden können.

Diese Aufgabe wird durch eine Bremsscheibenanordnung für Scheibenbremsen, insbesondere für Landfahrzeuge, mit den Merkmalen des Anspruchs 1 sowie durch ein Verfahren zur Herstellung einer Bremsscheibenanordnung für Scheibenbremsen, insbesondere für Landfahrzeuge, mit den Merkmalen des Anspruchs 13 gelöst. Bevorzugte Ausführungsformen sind Gegenstand der abhängigen Ansprüche.

Erfindungsgemäß ist eine Bremsscheibenanordnung für Scheibenbremsen, insbesondere für Landfahrzeuge, vorgesehen, umfassend einen Reibring, einen Anbindungsadapter zur Anbindung der Bremsscheibenanordnung an eine Radnabe, und zumindest ein Verbindungselement zur Verbindung von Reibring und Anbindungsadapter, wobei der Anbindungsadapter einen Befestigungsbereich aufweist, in welchem das Verbindungselement ortsfest befestigt ist, und wobei der Reibring einen Aufnahmebereich aufweist, in welchem das Verbindungselement derart aufgenommen ist, dass der Reibring auf bzw. in Bezug zu dem Verbindungselement radial beweglich ist. Die Bremsscheibenanordnung ist somit zweckmäßigerweise für Bremsscheiben vorgesehen, deren Reibring entweder massiv (das heißt ohne Belüftungskanäle bzw. Zirkulationsraum) oder als innenbelüfteter Reibring (mit Zirkulationsraum bzw. Belüftungskammern) ausgebildet ist. Die Bremsscheibenanordnung dient insbesondere der Anordnung an Landfahrzeugen, wie beispielsweise Pkw, Lkw, Anhänger, Züge oder Ähnlichem, soll jedoch nicht auf die vorgenannte Aufzählung beschränkt sein. Die Bremsscheibenanordnung ist ausgelegt, mit dem Rad oder einer Radnabe mittelbar oder unmittelbar befestigt zu werden, sodass diese mit dem Rad umläuft. An den Reibring können zum Abbremsen des Rades von beiden Seiten Bremsbeläge gepresst werden, welche in einem Bremssattel vorgesehen sind, der den Reibring umspannt. Die Bremsscheibenanordnung weist weiterhin zweckmäßigerweise einen Anbindungsadapter auf, welcher ausgelegt ist, die Bremsscheibenanordnung an eine Radnabe anzubinden. Die Anbindung kann hierbei mittelbar über zwischengeschaltete Elemente oder unmittelbar an die Radnabe erfolgen. Es versteht sich, dass der Anbindungsadapter einen topfförmigen Abschnitt aufweisen kann, welcher mit dem Rad oder der Radnabe verbunden ist. Ebenfalls kann der Anbindungsadapter Teil der Radnabe selbst sein. Weiterhin vorgesehen ist zumindest ein Verbindungselement zur Verbindung von Reibring und Anbindungsadapter. Das Verbindungselement ist somit ausgelegt, Reibring und Anbindungsadapter derart miteinander zu verbinden, dass diese axial (das heißt in Richtung der Rotationsachse der Bremsscheibenanordnung gesehen) und in umfänglicher Rotationsrichtung der Bremsscheibenanordnung nicht oder nur geringfügig zueinander beweglich sind, um Kräfte von dem Reibring auf den Anbindungsadapter zu übertragen. Reibring und Anbindungsadapter sind somit derart als getrennte Teile voneinander ausgebildet, dass sie im Wesentlichen durch einen Ringspalt voneinander getrennt sind und untereinander lediglich durch das zumindest eine Verbindungselement miteinander verbunden sind, von welchem ein erstes Ende bzw. ein erster Bereich mit dem Anbindungsadapter in Eingriff steht und von welchem ein zweites Ende bzw. zweiter Bereich mit dem Reibring in Eingriff steht. Hierfür weist der Anbindungsadapter einen Befestigungsbereich auf, in welchem das Verbindungselement ortsfest befestigt ist. Der Befestigungsbereich im Anwendungsadapter kann insbesondere als sich radial zur Rotationsachse der Bremsscheibenanordnung erstreckender Rücksprung in dem Anbindungsadapter ausgebildet sein. Das erste Ende des Verbindungselements ist in dem Befestigungsbereich des Anbindungsadapters derart ortsfest befestigt, dass - selbst bei großer Temperatureinwirkung - eine (vorzugsweise radiale) Relativbewegung von Verbindungselement zu Anbindungsadapter nicht möglich ist. Zweckmäßigerweise weist der Reibring einen Aufnahmebereich auf, in welchem das Verbindungselement derart aufgenommen ist, dass der Reibring auf bzw. in Bezug zu dem Verbindungselement radial beweglich ist. Der Aufnahmebereich des Reibrings kann als sich vom Innenumfang desselben radial in diesen hinein erstreckender Rücksprung ausgebildet sein. Hierin ist der zweite Bereich bzw. das zweite Ende bzw. gegenüberliegende Bereich bzw. Ende des Verbindungselements derart aufgenommen bzw. eingebettet, dass eine Relativbewegung zwischen dem Verbindungselement und dem Reibring in Radialrichtung der Bremsscheibenanordnung möglich ist. In anderen Worten sind Verbindungselement und Reibring derart miteinander verbunden, dass eine Bewegung zwischen Verbindungselement (und somit Anbindungsadapter) und Reibring in axialer Richtung oder umfänglicher Rotationsrichtung der Bremsscheibenanordnung nicht oder nur geringfügig zugelassen wird. Jedoch ist es dem Reibring möglich, in radialer Richtung der Bremsscheibenanordnung bzw. in Längsrichtung bzw. parallel bzw. entlang der Längsachse des Verbindungselements zu gleiten bzw. sich zu bewegen. Dieser Effekt wird insbesondere während des Bremsvorgangs aufgrund der unterschiedlichen Temperaturniveaus in der Bremsscheibenanordnung ermöglicht bzw. verstärkt. Hierbei weist der Reibring die größte Temperatur auf, gefolgt von der Temperatur des Verbindungselements und des Anbindungsadapters, wobei die Temperatur des Anbindungsadapters am geringsten ist. Infolgedessen dehnt sich der Reibring stärker als das Verbindungselement aus, so dass im Aufnahmebereich ein Spalt zwischen dem zweiten Ende des Verbindungselements und dem Reibring auftritt, welcher ein freies Gleiten bzw. eine Bewegung in radialer Richtung zulässt. Da das Verbindungselement wärmer als der Anbindungsadapter ist, dehnt sich dieses im Befestigungsbereich stärker als der Anbindungsadapter aus, so dass die Verbindung zwischen dem Verbindungselement und Anbindungsadapter aufgrund von einem erhöhten Presssitz während des Bremsvorgangs noch stärker wird. Besonders vorteilhafterweise ist das Verbindungselement aus einem anderen Material als der Anbindungsadapter und der Reibring ausgebildet. Besonders zweckmäßigerweise ist der Reibring aus einem Gussmaterial, wie Grauguss, oder einem Keramikwerkstoff hergestellt. Der Anbindungsadapter kann ebenfalls aus einem Gussmaterial hergestellt sein, vorzugsweise Grauguss, und ist besonders vorteilhafterweise aus dem gleichen Material wie der Reibring hergestellt. Das Verbindungselement ist zweckmäßigerweise aus Stahl oder Ähnlichem ausgebildet. Durch die erfindungsgemäße Bremsscheibenanordnung wird somit sichergestellt, dass sich der - sehr heiße - Reibring radial frei ausdehnen kann und somit ein Aufschirmen vermieden wird, wodurch die Betriebssicherheit der Bremsscheibenanordnung deutlich verbessert werden kann. Zweckmäßigerweise ist eine Vielzahl von vorzugsweise gleichmäßig über den Umfang des Anbindungsadapters angeordneten Verbindungselementen vorgesehen. Hierbei können die Verbindungselemente entlang des Außenumfangs des Anbindungsadapters bzw. Innenumfangs des Reibrings angeordnet sein. Um Kräfte optimal zwischen Reibring und Anbindungsadapter verteilen zu können, ist es besonders bevorzugt, wenn die Vielzahl der Verbindungselemente gleichmäßig in umfänglicher Richtung verteilt ist. Besonders zweckmäßigerweise sind acht bis zwölf Verbindungselemente vorgesehen. Besonders vorzugsweise sind zehn Verbindungselemente vorgesehen. Bei Kraftfahrzeugen ist es besonders vorteilhaft, wenn die gleiche Anzahl wie Befestigungselemente für Räder oder ein Vielfaches davon vorgesehen sind, d. h. bei beispielsweise fünf Radbolzen, fünf, zehn oder fünfzehn Verbindungselemente.

Vorzugsweise sind der Reibring und der Anbindungsadapter im Wesentlichen konzentrisch zueinander um die Rotationsachse der Bremsscheibenanordnung angeordnet. In anderen Worten sind Reibring und Anbindungsadapter derart zueinander angeordnet, dass der Reibring den Anbindungsadapter zumindest teilweise umgibt bzw. umschließt. Besonders vorzugsweise sind der Aufnahmebereich des Reibrings und der Befestigungsbereich des Anbindungsadapters im Wesentlichen auf einer senkrecht zur Rotationsachse der Bremsscheibenanordnung gelegenen Ebene angeordnet. In anderen Worten können der Aufnahmebereich des Reibrings und ein korrespondierender Befestigungsbereich des Anbindungsadapters entlang einer radialen Linie der Bremsscheibenanordnung angeordnet sein.

Vorzugsweise ist das Verbindungselement als länglicher Körper ausgebildet, dessen Längsachse vorzugsweise senkrecht zur Rotationsachse der Bremsscheibenanordnung steht. Es versteht sich, dass das Verbindungselement jedoch nicht zwingend eine Länge aufweisen muss, die größer als die Erstreckung in Querschnittsrichtung ist. Die Längsachse des Verbindungselements ist vorzugsweise senkrecht zur Rotationsachse der Bremsscheibenanordnung. In anderen Worten steht die Längsachse des Verbindungselements im Wesentlichen parallel zu einer radialen Linie der Bremsscheibenanordnung oder fluchet bzw. stimmt mit dieser überein.

Besonders vorteilhafterweise ist das Verbindungselement zumindest teilweise als zylindrischer Körper ausgebildet, der vorzugsweise einen runden, besonders vorzugsweise kreisrunden Querschnitt aufweist. Das Verbindungselement ist somit entlang seiner Längsachse bzw. Längserstreckung zumindest teilweise, vorzugsweise vollständig als zylindrischer Körper ausgebildet. Hierbei kann das Verbindungselement einen runden, zweckmäßigerweise kreisrunden Querschnitt aufweisen. Der Querschnitt steht hierbei im Wesentlichen senkrecht zur Längsachse bzw. Längserstreckung des Verbindungselements. Infolgedessen kann das Verbindungselement im Querschnitt eine ovale oder kreisrunde Form aufweisen. Besonders vorteilhaft ist die kreisrunde Querschnittsform des Verbindungselements, zumindest im Bereich der Anordnung desselben im Reibring und dem Anbindungsadapter, da hierdurch die Montage bei einem mehrstufigen Gussverfahren vereinfacht werden kann. Es versteht sich, dass das Verbindungselement im Querschnitt auch eine beliebig andere eckige Konfiguration besitzen kann, beispielsweise viereckig, rautenförmig, dreieckig oder vieleckig.

Zweckmäßigerweise ist das Verbindungselement zumindest teilweise als sich zum Reibring verjüngender Körper ausgebildet. Das Verbindungselement kann somit entlang seiner gesamten Längserstreckung oder nur entlang eines Teilbereichs als sich zum Reibring hin verjüngender bzw. konischer Körper ausgebildet sein. In anderen Worten verjüngt sich das Verbindungselement ausgehend vom Anbindungsadapter in Richtung des Reibrings. Die Verjüngung kann besonders vorteilhafterweise konstant bzw. linear verjüngend ausgebildet sein. Es versteht sich, dass die Querschnittsabnahme in Längsrichtung des Verbindungselements auch nicht konstant bzw. nicht linear vorgesehen sein kann. Hierbei kann die Verjüngung auch lediglich im Bereich der Anbindung an den Reibring vorgesehen sein. Beispielsweise kann sich an den sich verjüngenden Bereich, welcher im Bereich der Anbindung an den Reibring vorgesehen ist, ein zylindrischer Bereich mit konstantem Querschnitt anschließen, der vorzugsweise von einem sich wiederum verjüngenden Bereich zu dem Anbindungsadapter hin gefolgt ist, so dass sich eine Art Doppelkonus ergibt.

In einer bevorzugten Ausführungsform ist das Verbindungselement als Hohlkörper ausgebildet. Das Verbindungselement kann somit entweder als massiver Körper oder als Hohlkörper ausgebildet sein. Bei einer hohlen Ausbildung des Verbindungselements ist dieses zweckmäßigerweise als Art Buchse oder Hülse ausgebildet und weist somit ein Durchgangsloch entlang der Längserstreckung des Verbindungselements auf.

Zweckmäßigerweise weist das Verbindungselement zumindest einen sich in Richtung dessen Längsachse erstreckenden Rücksprung auf, welcher in einem Bodenabschnitt des Verbindungselements endet. Der Rücksprung kann somit als Ausnehmung oder Vertiefung ausgebildet sein, so dass das Verbindungselement besonders vorteilhafterweise becherförmig ausgebildet ist. Der Querschnitt - senkrecht zur Längsachse des Verbindungselements gesehen - kann beliebig ausgestaltet sein, weist jedoch besonders vorteilhafterweise die gleiche Querschnittskonfiguration auf, wie der Außenquerschnitt des Verbindungselements. Besonders zweckmäßigerweise ist der Querschnitt des Rücksprungs rund, insbesondere kreisförmig ausgebildet. Das Querschnittsflächenverhältnis des Rücksprungs zu dem Verbindungselement (Querschnittsfläche des Verbindungselements inklusive Rücksprung) beträgt etwa mindestens 0,25, vorzugsweise etwa mindestens 0,4 und besonders vorzugsweise etwa mindestens 0,6. Die Tiefe des Rücksprungs (in Richtung der Längsachse gesehen) beträgt vorteilhafterweise etwa zumindest 0,35, vorzugsweise etwa zumindest 0,6 und besonders vorzugsweise etwa zumindest 0,85 der gesamten Längserstreckung des Verbindungselements. In einer vorteilhaften Ausbildung ist die (in Richtung der Längsachse gesehen) Dicke des Bodenabschnitts etwa gleich der Wandstärke der Mantelfläche des Verbindungselements ausgebildet.

Vorteilhafterweise ist das Verbindungselement derart angeordnet, dass sich der Rücksprung zu dem Reibring oder dem Anbindungsadapter hin öffnet. In anderen Worten erstreckt sich der Rücksprung von dem Reibring aus in das Verbindungselement hinein bzw. von dem Anbindungsadapter aus in das Verbindungselement hinein. Bei einer Konfiguration, bei welcher sich der Rücksprung zu dem Anbindungsadapter hin öffnet, kann der Rücksprung vollständig durch das Material des Anbindungsadapters gefüllt sein. Alternativ kann der Rücksprung nicht vom Material des Anbindungsadapters ausgefüllt sein, wobei besonders zweckmäßigerweise eine radiale Durchgangsöffnung zu dem Innenumfang des Anbindungsadapters vorgesehen ist. Weiterhin alternativ kann sich das Material des Anbindungsadapters zumindest teilweise in den Rücksprung hinein erstrecken. Entsprechende Alternativlösungen können bei einer Öffnung des Rücksprungs zu dem Reibring hin vorgesehen sein, so dass das Material des Reibrings sich zweckmäßigerweise nicht in den Rücksprung hinein erstreckt, wobei in einer derartigen Ausführungsform besonders vorteilhafterweise eine Zirkulationsverbindung zwischen dem Zirkulationsraum des Reibrings und dem Rücksprung vorgesehen ist. Durch diese Konfiguration wird eine optimierte Kühlung der Bremsscheibe aufgrund der Oberflächenvergrößerung an den Verbindungselementen ermöglicht.

Besonders vorteilhafterweise weist das Verbindungselement zwei Rücksprünge auf, welche sich von den gegenüberliegenden Stirnseiten des Verbindungselements in dieses hinein erstrecken. Die beiden Rücksprünge sind somit im Wesentlichen gegenüberliegend angeordnet. Hierbei können die Rücksprünge in einem gemeinsamen Bodenabschnitt enden. Die Rücksprünge können hinsichtlich ihrer Tiefe und ihres Querschnitts identisch ausgebildet sein, vorteilhafterweise sind diese jedoch verschiedenartig ausgebildet, so dass sich der von dem Reibring ausgehende Rücksprung tiefer in das Verbindungselement hinein erstreckt als der von dem Anbindungsadapter ausgehende zweite Rücksprung.

Vorzugsweise ist der Bodenabschnitt in dem Bereich des Verbindungselements vorgesehen, der dem zwischen Reibring und Anbindungsadapter bestehenden Spalt entspricht, wobei der Bodenabschnitt vorzugsweise zumindest teilweise - in radialer Richtung der Bremsscheibenanordnung gesehen - mit jeweiligen Randbereichen des Reibrings und Anbindungsadapters überlappt. In anderen Worten kann das Verbindungselement in dem Bereich des Spalts bzw. Ringspalts zwischen Reibring und Anbindungsadapter im Wesentlichen massiv ausgebildet sein, wobei sich der massive Bereich des Verbindungselements zweckmäßigerweise noch etwas bzw. geringfügig in radialer Richtung der Bremsscheibenanordnung gesehen in den Reibring und den Anbindungsadapter hinein erstreckt. Hierdurch wird sichergestellt, dass der Bereich des Verbindungselements, welcher den größten Scherkräften ausgesetzt ist, stabil genug ausgebildet ist, wobei aufgrund der Rücksprünge der Materialeinsatz reduziert werden kann und der Temperatureintrag in die Radnabe minimiert werden kann, indem eine größere Oberfläche zur Wärmeabfuhr bereitgestellt ist.

In einer nicht erfindungsgemnäβen Ausführungsform weist der Bodenabschnitt des Verbindungselements eine sich vorzugsweise im Wesentlichen in Richtung der Längsachse erstreckende Durchgangsöffnung auf, so dass vorzugsweise eine Verbindung zwischen dem durch den Rücksprung gebildeten Raum und dem Innenumfang.des Anbindungsadapters und/oder einem Zirkulationsraum des Reibrings vorgesehen ist. Die Durchgangsöffnung kann eine beliebige Querschnittskonfiguration aufweisen. Zweckmäßigerweise ist das Querschnittsflächenverhältnis der Durchgangsöffnung zu dem Verbindungselement etwa <0,25, vorzugsweise etwa <0,15 und besonders vorzugsweise etwa <0,08.

Zweckmäßigerweise weist der Anbindungsadapter eine radiale Ausnehmung auf, die sich vom Innenumfang des Anbindungsadapters zu dessen Befestigungsbereich erstreckt, in welchem das Verbindungselement befestigt ist. Die Ausnehmung erstreckt sich somit im Wesentlichen entlang einer radialen Richtung bzw. Linie in Bezug auf die Rotationsachse der Bremsscheibenanordnung. Die Ausnehmung kann hierbei eine beliebige Querschnittsform aufweisen, ist jedoch zweckmäßigerweise rund bzw. kreisrund ausgebildet. Hierbei kann die Ausnehmung in Bezug auf den Hohlraum des Verbindungselements konzentrisch ausgebildet sein. Durch eine derartige Ausnehmung wird zweckmäßigerweise der Wärmehaushalt des Reibrings verbessert bzw. das Temperaturniveau in dem Verbindungselements während des Bremsvorgangs niedriger gehalten, da Luft darin zirkulieren kann.

Weiterhin zweckmäßig ist der Reibring als innenbelüfteter Reibring ausgebildet, wobei vorzugsweise der Hohlraum des als Hohlkörper ausgebildeten Verbindungselements mit dem Zirkulationsraum des Reibrings in Verbindung steht. Ein innenbelüfteter Reibring besteht zweckmäßigerweise aus zwei ringförmigen Scheiben, welche durch Stege derart miteinander verbunden sind, dass zwischen den beiden Scheiben ein Zirkulationsraum entsteht. Dieser steht zweckmäßigerweise mit dem Hohlraum des als Hohlkörper ausgebildeten Verbindungselements derart in Verbindung, dass Luft durch den Hohlraum des Verbindungselements in den Zirkulationsraum strömen kann. Hierdurch wird der Abtransport von Wärme aus sämtlichen Bauteilen der Bremsscheibenanordnung zusätzlich verbessert.

Bevorzugterweise weist das Verbindungselement einen vorzugsweise mit Rück - oder Vorsprüngen versehenen Verankerungsbereich auf, um einen Eingriff mit dem Befestigungsbereich des Anbindungsadapters bereit zu stellen. Hierdurch wird bei einem Eingießen des Verbindungselements in dem Anbindungsadapter bzw. einem Umgießen des Anbindungsadapters um das erste Ende des Verbindungselements die ortsfeste Verbindung desselben an dem Anbindungsadapter aufgrund des Formschlusses weiter verbessert.

Weiterhin erfindungsgemäß ist ein Verfahren zur Herstellung einer Bremsscheibenanordnung für Scheibenbremsen, insbesondere für Landfahrzeuge, vorgesehen, bei welcher ein Reibring und ein Anbindungsadapter durch einen Ringspalt voneinander getrennt sind und über zumindest ein Verbindungselement, dessen eines Ende in einem Befestigungsbereich des Anbindungsadapters ortsfest und dessen anderes Ende radial beweglich in einem Aufnahmebereich des Reibrings aufgenommen ist, miteinander verbunden sind, umfassend die Schritte: Herstellen eines Gießkems, Anordnen des Gießkerns in einer Gussform derart, dass eine erste Kammer entsprechend dem Reibring und eine zweite Kammer entsprechend dem Anbindungsadapter gebildet wird, Anordnen von zumindest einem Verbindungselement in einem die beiden Kammern verbindenden Raum und Einfüllen von geschmolzenem Metall in die Gussform.

Das erfindungsgemäße Verfahren zur Herstellung der Bremsscheibenanordnung kann in Abhängigkeit der verwendeten Materialien verschiedene Verfahrensschritte aufweisen.

Bei einer innenbelüfteten Bremsscheibe, bei welcher der Reibring und Anbindungsadapter (Adapter) aus dem identischen Material ausgebildet sind, sind folgende Verfahrensschritte vorteilhafterweise vorgesehen:
- Die Verbindungselemente werden bei der Kemherstellung in den Kern eingebunden und damit vorpositioniert.
- Das Kempaket mit den Verbindungselementen wird ggf. mit einer Schlichte versehen, um ein anschließendes Verschmelzen des Reibrings mit den Befestigungselementen zu vermeiden.
- Das Kempaket mit den Verbindungselementen wird in eine Gussform, vorzugsweise Sandform, eingelegt.
- Anschließend werden Reibring und Adapter in einem Gießschritt zusammen hergestellt sowie entgratet und gesäubert
- Abschließend mechanische Bearbeitung der gesamten Bremsscheibe (Reibring und Adapter).

Bei einer innenbelüfteten Bremsscheibe, bei welcher der Reibring und der Anbindungsadapter (Adapter) aus unterschiedlichen Materialien ausgebildet sind, können besonders vorteilhafterweise folgende Verfahrensschritte vorgesehen sein:
- Wird der Reibring zeitlich vor dem Adapter gegossen (z.B. wenn der Adapter aus Aluminium mit einem niedrigeren Schmelzpunkt hergestellt wird), werden die Verbindungselemente bei der Kemherstellung in den Kern eingebunden und damit vorpositioniert.
- Das Kernpaket mit den Verbindungselementen wird ggf. mit einer Schlichte versehen, um ein anschließendes Verschmelzen des Reibrings mit den Befestigungselementen zu vermeiden.
- Das Kempaket mit den Verbindungselementen wird in eine Gussform, vorzugsweise Sandform, eingelegt.
- Anschließend wird der Reibring gegossen, vorzugsweise im Sandgussverfahren.
- Der Reibring wird nach dem Gießprozess entgratet und gesäubert.
- Der gegossene unbearbeitete Reibring einschließlich der Verbindungselemente wird in die Gussform, vorzugsweise Sandguss, für den Adapter eingelegt. Da Adapter und die Verbindungselemente zueinander nicht beweglich sein müssen, kann das Aufbringen einer zusätzlichen Schlichte vor dem Gießen des Adapters ggf. entfallen.
- Anschließend wird der Adapter gegossen sowie entgratet und gesäubert.
- Abschließend mechanische Bearbeitung der gesamten Bremsscheibe (Reibring und Adapter).
- Wird der Adapter zeitlich vor dem Reibring gegossen, werden die Verbindungselemente in die Gussform, vorzugsweise Sandguss, für den Adapter eingelegt.
- Der Adapter wird gegossen und anschließend entgratet und gesäubert.
- Der Adapter mit den Verbindungselementen wird bei der Kemherstellung für den Lüftkanal der Bremsscheibe in den Kern integriert.
- Das Kernpaket mit Adapter und den Verbindungselementen wird ggf. mit einer Schlichte versehen, um ein anschließendes Verschmelzen des Reibrings mit den Befestigungselementen zu vermeiden.
- Das Kernpaket mit Adapter und den Verbindungselementen wird in eine Gussform, vorzugsweise Sandguss, für den Reibring eingelegt.
- Anschließend wird der Reibring gegossen, vorzugsweise im Sandgussverfahren, und entgratet und gesäubert.
- Abschließend mechanische Bearbeitung der gesamten Bremsscheibe (Reibring und Adapter).

Sollte die Bremsscheibe massiv ausgebildet sein, so ist die Herstellung wie oben angegeben anwendbar, jedoch ist es nicht notwendig, einen Kern vorzusehen.

Es versteht sich, dass sämtliche weiteren Merkmale und Vorteile der erfindungsgemäßen Bremsscheibenanordnung ebenfalls in den erfindungsgemäßen Verfahren zur Herstellung einer Bremsscheibenanordnung Anwendung finden können.

Weitere Vorteile und Merkmale der vorliegenden Erfindung ergeben sich aus der nachfolgenden Beschreibung von bevorzugten, beispielhaften Ausführungsformen mit Bezug auf die beigefügten Figuren, wobei einzelne Merkmale von einzelnen Ausführungsformen zu neuen Ausführungsformen kombiniert werden können. Es zeigen:
Fig. 1 teilweise geschnittene Drauf- und Seitenansichten sowie eine teilweise geschnittene perspektivische Ansicht einer ersten bevorzugten beispielhaften Ausführungsform der erfindungsgemäßen Bremsscheibenanordnung;
Fig. 2 teilweise geschnittene Drauf- und Seitenansichten sowie eine teilweise geschnittene perspektivische Ansicht einer zweiten bevorzugten beispielhaften Ausführungsform der erfindungsgemäßen Bremsscheibenanordnung;
Fig. 3 eine geschnittene perspektivische Ansicht einer dritten bevorzugten, beispielhaften Ausführungsform der erfindungsgemäßen Bremsscheibenanordnung;
Fig. 4 eine geschnittene Seitenansicht einer vierten bevorzugten Ausführungsform der erfindungsgemäßen Bremsscheibenanordnung;
Fig. 5 eine teilweise geschnittene Seitenansicht einer fünften bevorzugten Ausführungsform der erfindungsgemäßen Bremsscheibenanordnung;
Fig. 6 eine geschnittene Seitenansicht einer sechsten bevorzugten Ausführungsform der erfindungsgemäßen Bremsscheibenanordnung;
Figur 7 eine geschnittene Seitenansicht einer weiteren bevorzugten Ausführungsform der erfindungsgemäßen Bremsscheibenanordnung;
Figur 8 eine geschnittene Seitenansicht einer weiteren bevorzugten Ausführungsform der erfindungsgemäßen Bremsscheibenanordnung;
Fig. 9 verschiedene Draufsichten und Querschnittsansichten von beispielhaften Ausführungsformen des erfindungsgemäßen Verbindungselements.

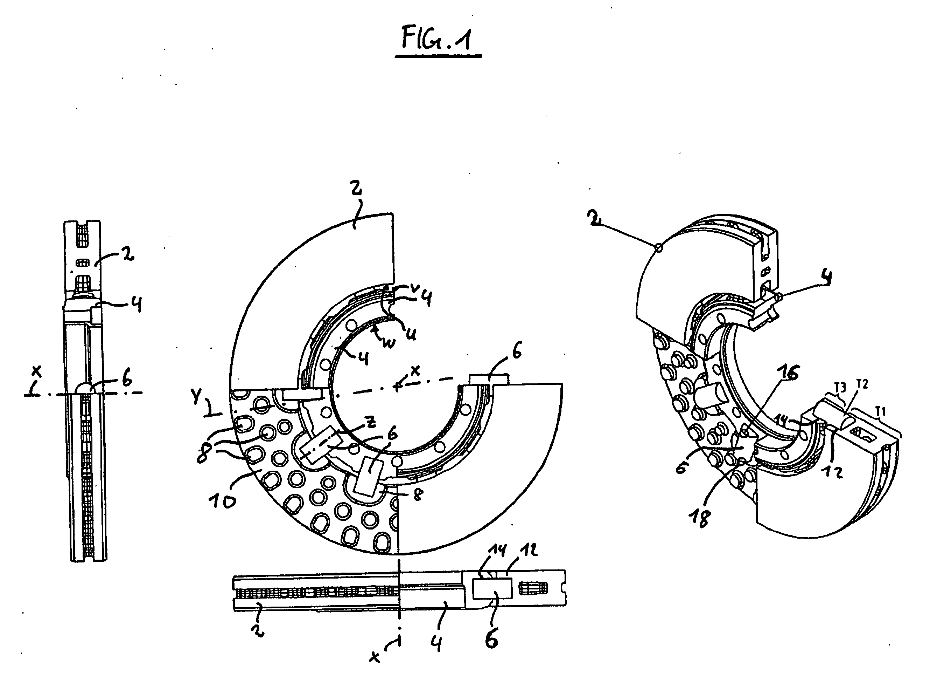

Die in Figur 1 dargestellte erste bevorzugte beispielhafte Ausführungsform der erfindungsgemäßen Bremsscheibenanordnung zeigt einen Reibring 2, einen Anbindungsadapter 4 sowie eine Vielzahl von Verbindungselementen 6. Die Bremsscheibenanordnung ist über die Rotationsachse X mit einem Rad oder einer Radnabe mittelbar oder unmittelbar befestigt und dreht sich somit um die Rotationsachse X zusammen mit dem Rad des Fahrzeugs.

Der Reibring 2 ist in der dargestellten Ausführungsform als innenbelüfteter Reibring ausgebildet und besteht somit aus zwei ringförmigen Scheiben, welche über eine Vielzahl von Stegen 8 derart miteinander verbunden sind, dass ein Zirkulationsraum 10 entsteht. Es versteht sich, dass der Reibring 2 ebenfalls als massiver Körper ohne Zirkulationsraum ausgebildet sein kann.

Zur Aufnahme des Verbindungselements 6 weist der Reibring 2 einen Aufnahmebereich 12 auf. Der Aufnahmebereich 12 erstreckt sich von dem Innenumfang U des Reibrings in radialer Richtung Y der Bremsscheibenanordnung in den Reibring 2 hinein.

Der Anbindungsadapter 4 ist ringförmig dargestellt und kann integraler Bestandteil einer Radnabe sein. Der Anbindungsadapter 4 dient jedoch zumindest zur mittelbaren oder unmittelbaren Anbindung der Bremsscheibenanordnung an die Radnabe oder das Rad. Zur Befestigung des Verbindungselements 6 in dem Anbindungsadapter 4 weist dieser einen Befestigungsbereich 14 auf. Der Befestigungsbereich 14 erstreckt sich vom Außenumfang V des Anbindungsadapters 4 in radialer Richtung Y in diesen hinein.

Reibring und Anbindungsadapter sind mittels eines Gießverfahrens hergestellt, beispielsweise aus Grauguss. Besonders vorteilhafterweise bestehen Reibring 2 und Anbindungsadapter 4 aus dem gleichen Material.

In der dargestellten Ausführungsform ist eine Vielzahl von Verbindungselementen 6 vorgesehen. Die Verbindungselemente 6 dienen zur Verbindung von Reibring 2 und Anbindungsadapter 4. Hierfür sind die Verbindungselemente 6 in dem Anbindungsadapter 4 derart ortsfest befestigt, dass diese in Bezug auf den Anbindungsadapter 4 zumindest in radialer Richtung Y nicht beweglich sind. Insbesondere ist ein erstes Ende 16 des Verbindungselements 6 starr in dem Anbindungsadapter 4 eingebettet. Das gegenüberliegende bzw. entgegengesetzte zweite Ende 18 des Verbindungselements 6 ist derart in dem Aufnahmebereich 12 des Reibrings 2 aufgenommen, dass der Reibring 2 auf dem bzw. in Bezug auf das Verbindungselement 6 radial beweglich ist. Infolgedessen kann sich der Reibring 2 während des Bremsens aufgrund der hohen Temperatur ungehindert ausdehnen, da er auf den Verbindungselementen 6 frei radial beweglich gelagert ist.

Dies wird aufgrund der verschiedenen Ausdehnungskoeffizienten von Reibring 2, Anbindungsadapter 4 und Verbindungselement 6 zusätzlich begünstigt. So weist der Reibring 2 während des Bremsens die höchste Temperatur T1 auf, gefolgt von der Temperatur T2 des Verbindungselements 6, und wiederum gefolgt von der Temperatur T3 des Anbindungsadapters 4, welche kleiner als die Temperaturen T1 und T2 ist. Infolgedessen dehnt sich der Reibring 2 während des Bremsens am meisten aus, so dass ein kleiner Spalt zwischen dem Verbindungselement 6 und dem Reibring 2 entsteht. Da das Verbindungselement 6 jedoch eine höhere Temperatur T2 als der Anbindungsadapter 4 aufweist, dehnt sich dieses im Verhältnis zum Anbindungsadapter 4 stärker aus, so dass ein Presssitz zwischen dem ersten Ende 16 des Verbindungselements 6 und dem Befestigungsbereich 14 des Anbindungsadapters 4 geschaffen wird.

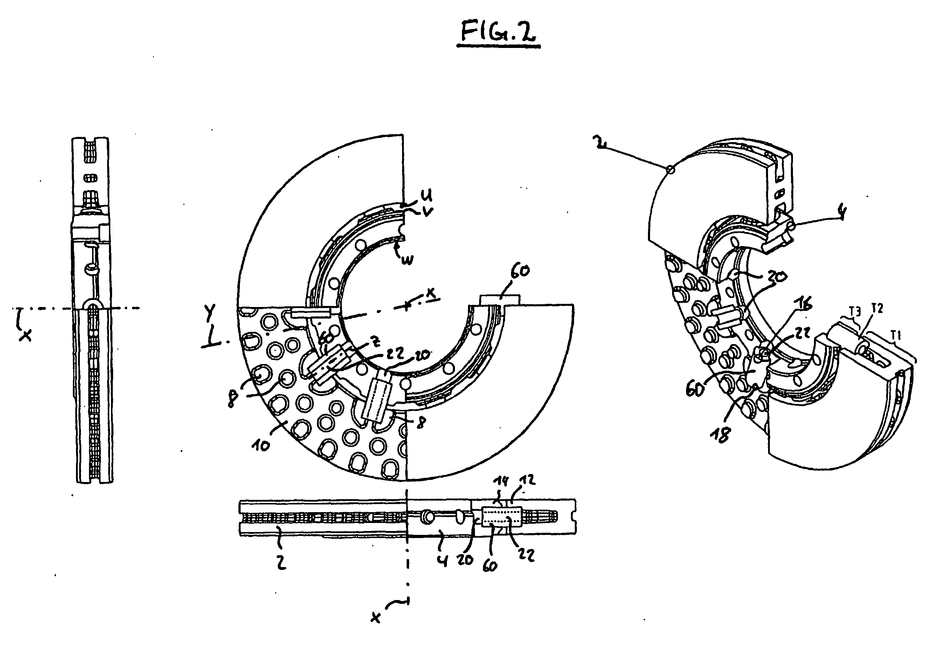

In Figur 2 ist eine weitere bevorzugte beispielhafte Ausführungsform der erfindungsgemäßen Bremsscheibenanordnung dargestellt, wobei gleiche Elemente mit den gleichen Bezugszeichen versehen sind. Im Gegensatz zu der in Figur 1 dargestellten Ausführungsform ermöglicht die Bremsscheibenanordnung gemäß Figur 2 eine Verbesserung des Wärmehaushalts des Reibrings 2. Dies wird ermöglicht, indem am Innenumfang W des Anbindungsadapters 4 Ausnehmungen 20 vorgesehen sind, die sich in radialer Richtung Y bis zum Befestigungsbereichen 14 des Anbindungsadapters 4 erstrecken.

In dem Befestigungsbereich 14 sind Verbindungselemente 60 vorgesehen, die als Hohlkörper mit einem sich in radialer Richtung Y erstreckenden Hohlraum 22 ausgebildet sind. Am zweiten Ende 18 des Verbindungselements 60 endet der Hohlraum 22 derart in dem Aufnahmebereich 12 des Reibrings, dass er mit dem Zirkulationsraum 10 in Verbindung steht. Hierdurch wird ermöglicht, dass Luft zwischen dem Nabeninneren durch die Ausnehmung 20 und den Hohlraum 22 in den Zirkulationsraum 10 strömen kann, wodurch die Betriebssicherheit aufgrund des optimierten Wärmehaushalts der Bremsscheibenanordnung nochmals verbessert werden kann.

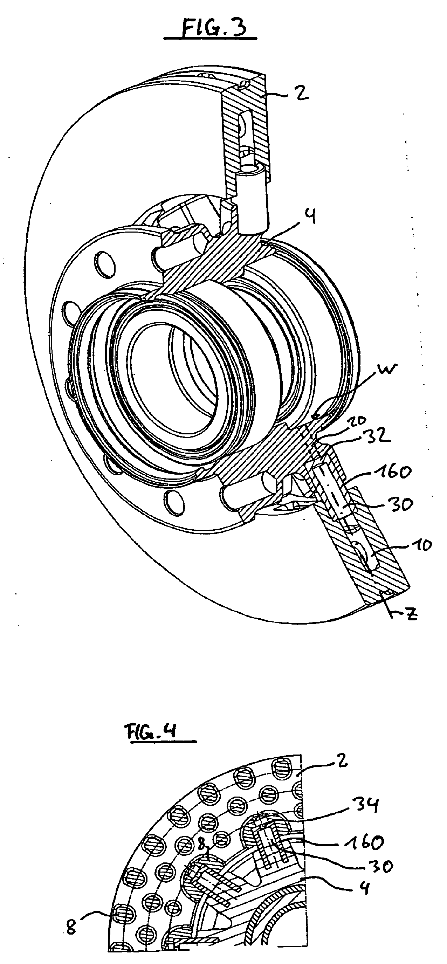

In Figur 3 ist eine weitere bevorzugte beispielhafte Ausführungsform der erfindungsgemäßen Bremsscheibenanordnung dargestellt, wobei gleiche Elemente mir den gleichen Bezugzeichen versehen sind. Bei dieser Ausführungsform ist das Verbindungselement 160 mit einem ersten Rücksprung 30 ausgebildet, welcher in einem Bodenabschnitt 32 des Verbindungselements 160 endet. Der Bodenabschnitt 32 kann eine Durchgangsöffnung 34 aufweisen (Figur 4), welche über eine radiale Ausnehmung 20 (gestrichelt dargestellt) mit dem Innenumfang W des Anbindungsadapters 4 verbunden ist bzw. daran endet.

In Figur 4 ist eine weitere bevorzugte beispielhafte Ausführungsform der erfindungsgemäßen Bremsscheibenanordnung dargestellt, wobei gleiche Elemente mit den gleichen Bezugszeichen versehen sind. In der dargestellten Ausführungsform ist das Verbindungselement 160 derart angeordnet, dass sich der erste Rücksprung 30 zu dem Anbindungsadapter 4 hin öffnet. In anderen Worten erstreckt sich der erste Rücksprung 30 von dem Anbindungsadapter 4 in das Verbindungselement 160 hinein. Über die Durchgangsöffnung 34 steht der durch den ersten Rücksprung 30 gebildete Hohlraum mit dem Zirkulationsraum 10 des Reibrings 2 in Verbindung. Hierfür weist der Steg 8 des Reibrings 2, in welchem das Verbindungselement 160 zumindest partiell angeordnet ist, eine zweckmäßigerweise radiale Durchgangsbohrung bzw. Öffnung auf, sodass ein Luftaustausch (und damit Wärmeaustausch) zwischen Zirkulationsraum 10 und Rücksprung 30 stattfinden kann.

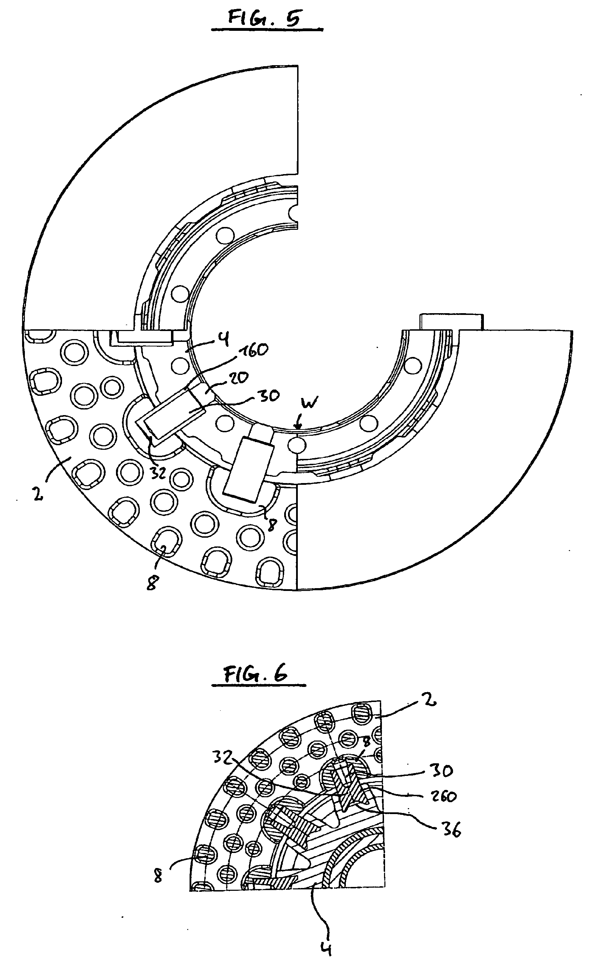

In Figur 5 ist eine weitere bevorzugte beispielhafte Ausführungsform der erfindungsgemäßen Bremsscheibenanordnung dargestellt, wobei gleiche Elemente mit den gleichen Bezugszeichen versehen sind. In dieser Ausführungsform endet die radiale Ausnehmung 20 des Anbindungsadapters 4 in dem ersten Rücksprung 30 des Verbindungselements 160. Hierdurch ist es besonders vorteilhafterweise möglich, die Kühlung der Bremsscheibe zu optimieren, da eine Oberflächenvergrößerung zur Wärmeübertragung an den Verbindungselementen 160 geschaffen ist. Wie in der in Figur 2 dargestellten Ausführungsform erstrecken sich die Verbindungselemente 160 nicht vollständig bis zum Innenumfang W des Anbindungsadapters 4.

In Figur 6 ist eine weitere bevorzugte beispielhafte Ausführungsform der erfindungsgemäßen Bremsscheibenanordnung dargestellt, wobei gleiche Elemente mit den gleichen Bezugszeichen versehen sind. Das Verbindungselement 260 weist zwei Rücksprünge, nämlich einen ersten Rücksprung 30 und einen zweiten Rücksprung 36 auf, welche sich von den gegenüberliegenden Stirnseiten des Verbindungselements 260 in dieses hineinerstrecken. Die beiden Rücksprünge 30, 36 enden zweckmäßigerweise in einem gemeinsamen Bodenabschnitt 32.

Der Bodenabschnitt 32 des Verbindungselements 6, 60, 160, 260 kann derart vorgesehen sein, dass diese in(radialer) Höhe bzw. Abschnitt des zwischen dem Reibring 2 und Anbindungsadapter 4 ausgebildeten Spalts vorgesehen bzw. angeordnet ist. Besonders vorteilhafterweise ragt der Bodenabschnitt noch etwas (in radialer Richtung) in die jeweiligen Randbereiche des Reibrings 2 und Anbindungsadapters 4 hinein, so dass ein Verbindungselement geschaffen wird, welches besonders sicher gegen Abscherung ausgebildet ist.

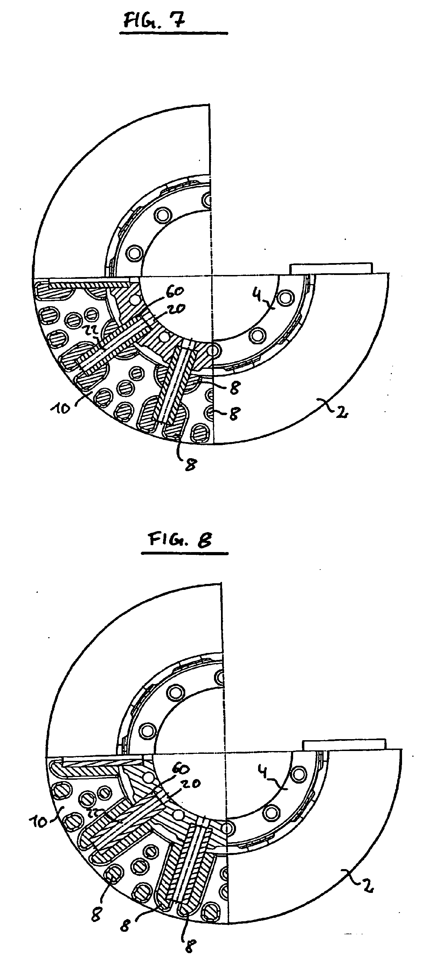

In Figur 7 ist eine weitere bevorzugte beispielhafte Ausführungsform der erfindungsgemäßen Bremsscheibenanordnung dargestellt, wobei gleiche Elemente mit den gleichen Bezugszeichen versehen sind. Wie ersichtlich, erstreckt sich das Verbindungselement 60 bis annähernd zum Außenumfang des Reibrings 2 in diesen hinein. In anderen Worten kann sich das Verbindungselement 60 in radialer Richtung vorzugsweise etwa mindestens bis zur Hälfte in den Reibring 2 hinein erstrecken. Besonders vorteilhafterweise erstreckt sich das Verbindungselement 60 etwa über das 0,2 - 0,8-fache der radialen Erstreckung des Reibrings 2, vorzugsweise etwa über das 0,3 - 0,8-fache der radialen Erstreckung des Reibrings 2 in diesen hinein. Das Verbindungselement 60 kann sich auch bis zum Außenumfang des Reibrings 2 erstrecken. Vorteilhafterweise jedoch erstreckt sich das Verbindungselement 60 nicht bis zum Außenumfang des Reibrings 2, sondern ist von diesem (nach innen) zurückversetzt bzw. beabstandet. An seinem jeweils dem Innenumfang und dem Außenumfang des Reibrings 2 zugewandten Bereich ist das Verbindungselement 60 zweckmäßigerweise über Stege 8 vom Material des Reibrings 2 umschlossen. Wie ersichtlich, sind diese Stege 8 nicht miteinander verbunden, so dass ein im Bereich des Reibrings 2 vorgesehener mittlerer Abschnitt des Verbindungselements 60 nicht vom Material des Reibrings 2 umschlossen ist. Hierdurch kann eine verbesserte radiale Ausdehnung des Reibrings 2 gewährleistet werden.

In Figur 8 ist eine weitere bevorzugte beispielhafte Ausführungsform der erfindungsgemäßen Bremsscheibenanordnung dargestellt, wobei gleiche Elemente mit den gleichen Bezugszeichen versehen sind. Im Gegensatz zu der in Figur 7 dargestellten Ausführungsform ist das Verbindungselement 60 im Bereich des Reibrings 2 von dem Material des Reibrings 2 vollständig umgeben. In anderen Worten ist das Verbindungselement 60 im Bereich eines Stegs 8 des Reibrings 2 derart eingeschlossen, dass der Bereich des Verbindungselements, welcher im Reibring 2 angeordnet ist, vom Material des Reibrings 2 vollständig ummantelt bzw umschlossen ist. In radialer Richtung jedoch ist der Steg 8 derart unterbrochen, dass eine Belüftung des als Hohlzylinder ausgebildeten Verbindungselements 60 möglich ist. Der Steg 8 kann somit eine radiale Ausnehmung aufweisen, welche im Wesentlichen mit dem Hohlraum des Verbindungselements 60 fluchtet und somit eine Ventilation vom Außenumfang der Bremsscheibenanordnung ermöglicht.

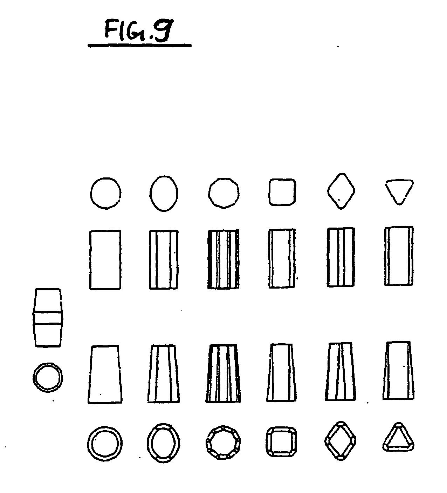

In Figur 9 sind verschiedene Varianten von bevorzugten beispielhaften Ausführungsformen des erfindungsgemäßen Verbindungselements 6, 60 dargestellt. Wie ersichtlich, kann das Verbindungselement 6, 60 als zylindrischer Körper ausgebildet sein, dessen senkrecht zu seiner Längsachse Z stehender Querschnitt über die Längserstreckung im Wesentlichen konstant bleibt. Der Querschnitt kann hierbei rund, oval oder kreisrund ausgebildet sein. Alternativ kann der Querschnitt ebenfalls dreieckig, viereckig, rautenförmig oder vieleckig ausgebildet sein.

In einer alternativen Ausführungsform kann das Verbindungselement 6, 60 sich zu seinem zweiten Ende 18 hin verjüngend ausgebildet sein, wobei die eingangs erwähnten Querschnittskonfigurationen ebenfalls möglich sind. Schließlich können die verschiedensten Varianten miteinander kombiniert werden, so dass beispielsweise ein Verbindungselement vorgesehen werden kann, dessen beiden Ende 16, 18 sich verjüngend ausgebildet sind.

### Bezugszeichenliste

- 2: Reibring
- 4: Anbindungsadapter
- 6: Verbindungselement
- 8: Steg
- 10: Zirkulationsraum
- 12: Aufnahmebereich
- 14: Befestigungsbereich
- 16: erstes Ende
- 18: zweites Ende
- 20: Ausnehmung
- 22: Hohlraum
- 30: erster Rücksprung
- 32: Bodenabschnitt
- 34: Durchgangsöffnung
- 36: zweiter Rücksprung
- 60: Verbindungselement
- 160: Verbindungselement
- 260: Verbindungselement
- U: Innenumfang
- V: Außenumfang
- W: Innenumfang
- X: Rotationsachse
- Y: radiale Richtung
- Z: Längsachse

## Patentansprüche

1. Bremsscheibenanordnung für Scheibenbremsen, insbesondere für Landfahrzeuge, umfassend
einen Reibring (2),
einen Anbindungsadapter (4) zur Anbindung der Bremsscheibenanordnung an eine Radnabe, und
zumindest ein Verbindungselement (6; 60) zur Verbindung von Reibring (2) und Anbindungsadapter (4),
wobei der Anbindungsadapter (4) einen Befestigungsbereich (14) aufweist, in welchem das Verbindungselement (6; 60; 160; 260) ortsfest befestigt ist, wobei der Reibring (2) einen Aufnahmebereich (12) aufweist, in welchem das Verbindungselement (6; 60) derart aufgenommen ist, dass der Reibring (2) in Relation zu dem Verbindungselement (6; 60) radial beweglich ist,
**dadurch gekennzeichnet, dass**
das Verbindungselement (160; 260) zumindest einen sich in Richtung dessen Längsachse (Z) erstreckenden Rücksprung (30; 36) aufweist, welcher in einem Bodenabschnitt (32) des Verbindungselements (160; 260) endet.

2. Bremsscheibenanordnung nach Anspruch 1, wobei der Reibring (2) und der Anbindungsadapter (4) im Wesentlichen konzentrisch zueinander um die Rotationsachse der Bremsscheibenanordnung angeordnet sind, und
wobei der Aufnahmebereich (12) des Reibrings (2) und der Befestigungsbereich (14) des Anbindungsadapters (4) im Wesentlichen auf einer senkrecht zur Rotationsachse (X) der Bremsscheibenanordnung gelegenen Ebene angeordnet sind.

3. Bremsscheibenanordnung nach einem der vorhergehenden Ansprüche, wobei das Verbindungselement (6; 60; 160; 260) als länglicher Körper ausgebildet ist, dessen Längsachse (Z) senkrecht zur Rotationsachse (X) der Bremsscheibenanordnung steht.

4. Bremsscheibenanordnung nach einem der vorhergehenden Ansprüche, wobei das Verbindungselement (6; 60) zumindest teilweise als zylindrischer Körper ausgebildet ist.

5. Bremsscheibenanordnung nach einem der vorhergehenden Ansprüche, wobei das Verbindungselement (6; 60; 160; 260) zumindest teilweise als sich zum Reibring (2) hin verjüngender Körper ausgebildet ist.

6. Bremsscheibenanordnung nach einem der vorhergehenden Ansprüche, wobei das Verbindungselement (60; 160; 260) als Hohlkörper ausgebildet ist.

7. Bremsscheibenanordnung nach einem der vorhergehenden Ansprüche, wobei das Verbindungselement (160; 260) derart angeordnet ist, dass sich der Rücksprung (30; 36) zu dem Reibring (2) oder dem Anbindungsadapter (4) hin öffnet.

8. Bremsscheibenanordnung nach einem der vorhergehenden Ansprüche, wobei das Verbindungselement (160; 260) zwei Rücksprünge (30; 36) aufweist, welche sich von den gegenüberliegenden Stirnseiten des Verbindungselements (160; 260) in dieses hinein erstrecken.

9. Bremsscheibenanordnung nach einem der vorhergehenden Ansprüche, wobei der Bodenabschnitt (32) in dem Bereich des Verbindungselements (160; 260) vorgesehen ist, der dem zwischen Reibring (2) und Anbindungsadapter (4) bestehenden Spalt entspricht, und wobei der Bodenabschnitt (32) vorzugsweise zumindest teilweise - in radialer Richtung der Bremsscheibenanordnung gesehen
- mit jeweiligen Randbereichen des Reibrings (2) und Anbindungsadapters (4) überlappt.

10. Bremsscheibenanordnung nach einem der vorhergehenden Ansprüche, wobei der Anbindungsadapter (4) eine radiale Ausnehmung (20) aufweist, die sich vom Innenumfang W des Anbindungsadapters (4) zu dessen Befestigungsbereich (14) erstreckt, in welchem das Verbindungselement (6; 60; 160; 260) befestigt ist.

11. Bremsscheibenanordnung nach einem der vorhergehenden Ansprüche, wobei der Reibring (2) als innenbelüfteter Reibring ausgebildet ist und wobei der Hohlraum (22) des als Hohlkörper ausgebildeten Verbindungselements (60; 160; 260) mit dem Zirkulationsraum (10) des Reibrings (2) in Verbindung steht.

12. Bremsscheibenanordnung nach einem der vorhergehenden Ansprüche, wobei das Verbindungselement (6; 60; 160; 260) einen mit Rück- oder Vorsprüngen versehenen Verankerungsbereich aufweist, um einen Eingriff mit dem Befestigungsbereich (14) des Anbindungsadapters (4) bereitzustellen.

13. Verfahren zur Herstellung einer Bremsscheibenanordnung für Scheibenbremsen, insbesondere für Landfahrzeuge, bei welcher ein Reibring (2) und ein Anbindungsadapter (4) durch einen Ringspalt voneinander getrennt sind und über zumindest ein Verbindungselement (6; 60; 160; 260) dessen eines Ende (16) in einem Befestigungsbereich (19) des Anbindungsadapters (4) ortsfest und dessen anderes Ende (18) radial beweglich in einem Aufnahmebereich (12) des Reibrings (2) aufgenommen ist, miteinander verbunden sind, umfassend die Schritte:
- Herstellen eines Gießkerns,
- Anordnen des Gießkerns in einer Gussform derart, dass eine erste Kammer entsprechend dem Reibring (2) und eine zweite Kammer entsprechend dem Anbindungsadapter (4) gebildet wird,
- Anordnen von zumindest einem Verbindungselement (6; 60; 160; 260) in einem die beiden Kammern verbindenden Raum, und wobei das Verbindungselement (160; 260) zumindest einen sich in Richtung dessen Längsachse (Z) erstreckenden Rücksprung (30; 36) aufweist, welcher in einem Bodenabschnitt (32) des Verbindungselements (160; 260) endet, und
- Einfüllen von geschmolzenem Metall in die Gussform.

## Claims

1. Brake disc arrangement for disc brakes, in particular for land vehicles, comprising
a friction ring (2),
an attachment adapter (4) for attaching the brake disc arrangement to a wheel hub, and
at least one connection element (6; 60) for connecting the friction ring (2) and the attachment adapter (4),
wherein the attachment adapter (4) comprises a fastening area (14) in which the connection element (6; 60; 160; 260) is stationarily fixed,
wherein the friction ring (2) comprises a receptacle area (12) in which the connection element (6; 60) is accommodated such that the friction ring (2) is radially movable relative to the connection element (6; 60),
**characterized in that**
the connection element (160; 260) comprises at least one recess (30; 36) extending in the direction of the longitudinal axis (Z) thereof, which recess ends in a bottom section (32) of the connection element (160; 260).

2. Brake disc arrangement according to claim 1, wherein the friction ring (2) and the attachment adapter (4) are arranged essentially concentrically to one another around the axis of rotation of the brake disc arrangement and
wherein the receptacle area (12) of the friction ring (2) and the fastening area (14) of the attachment adapter (4) are arranged essentially in a plane perpendicular to the axis of rotation (X) of the brake disc arrangement.

3. Brake disc arrangement according to any one of the preceding claims, wherein the connection element (6; 60; 160; 260) is designed as an elongate body, the longitudinal axis (Z) of which is perpendicular to the axis of rotation (X) of the brake disc arrangement.

4. Brake disc arrangement according to any one of the preceding claims, wherein the connection element (6; 60) is designed at least partially as a cylindrical body.

5. Brake disc arrangement according to any one of the preceding claims, wherein the connection element (6; 60; 160; 260) at least partially is designed as a body tapering towards the friction ring (2).

6. Brake disc arrangement according to any one of the preceding claims, wherein the connection element (60; 160; 260) is designed as a hollow body.

7. Brake disc arrangement according to any one of the preceding claims, wherein the connection element (160; 260) is arranged such that the recess (30; 36) opens towards the friction ring (2) or the attachment adapter (4).

8. Brake disc arrangement according to any one of the preceding claims, wherein the connection element (160; 260) comprises two recesses (30; 36) which project into the connection element (160; 260) from its two opposite end faces.

9. Brake disc arrangement according to any one of the preceding claims, wherein the bottom section (32) is provided in that area of the connection element (160; 260) which corresponds to the gap existing between the friction ring (2) and the attachment adapter (4), and wherein the bottom section (32) - in the radial direction of the brake disc arrangement - preferably at least partially overlaps with the respective edge regions of the friction ring (2) and the attachment adapter (4).

10. Brake disc arrangement according to any one of the preceding claims, wherein the attachment adapter (4) comprises a radial opening (20), which extends from the inner circumference (W) of the attachment adapter (4) to its fastening area (14), in which the connection element (6; 60; 160; 260) is fastened.

11. Brake disc arrangement according to any one of the preceding claims, wherein the friction ring (2) is designed as an internally ventilated friction ring, and wherein the hollow space (22) of the connection element (60; 160; 260), which is formed as a hollow body, communicates with the circulation space (10) of the friction ring (2).

12. Brake disc arrangement according to any one of the preceding claims, wherein the connection element (6; 60; 160; 260) comprises an anchoring area which is provided with recesses or projections in order to allow for an engagement with the fastening area (14) of the attachment adapter (4).

13. Method of manufacturing a brake disc arrangement for disc brakes, in particular for land vehicles, in which a friction ring (2) and an attachment adapter (4) are separated from one another by a ring gap and connected to one another by at least one connection element (6; 60; 160; 260), one end (16) of which is accommodated stationarily in a fastening area (19) of the attachment adapter (4), and the other end (18) of which is accommodated radially movable in a receptacle area (12) of the friction ring (2), comprising the following steps:
- manufacturing a foundry core,
- arranging the foundry core in a casting mold such that a first chamber corresponding to the friction ring (2) and a second chamber corresponding to the attachment adapter (4) is formed,
- arranging at least one connection element (6; 60; 160; 260) in a room connecting both chambers, and wherein the connection element (160; 260) comprises at least one recess (30; 36) extending in the direction of the longitudinal axis (Z) thereof, which recess ends in a bottom section (32) of the connection element (160; 260), and
- filling molten metal into the casting mold.

## Revendications

1. Agencement de disque de frein pour freins à disques, en particulier pour véhicules terrestres, comprenant
une bague de friction (2),
un adaptateur de raccordement (4) pour le raccordement de l'agencement de disque de frein sur un moyeu de roue, et
au moins un élément de liaison (6 ; 60) pour la liaison de la bague de friction (2) et de l'adaptateur de raccordement (4),
dans lequel l'adaptateur de raccordement (4) comporte une zone de fixation (14) dans laquelle l'élément de liaison (6 ; 60 ; 160 ; 260) est fixé de manière stationnaire, et dans lequel la bague de friction (2) comporte une zone de réception (12) dans laquelle l'élément de liaison (6 ; 60) est reçu de telle façon que la bague de friction (2) est déplaçable radialement en relation à l'élément de liaison (6 ; 60),
**caractérisé en ce que**
l'élément de liaison (160 ; 260) comporte au moins un ressaut (30 ; 36) s'étendant dans la direction de son axe longitudinal (Z) et qui se termine dans un tronçon de fond (32) de l'élément de liaison (160 ; 260).

2. Agencement de disque de frein selon la revendication 1, dans lequel la bague de friction (2) et l'adaptateur de raccordement (4) sont agencés sensiblement concentriquement l'un par rapport à l'autre autour de l'axe de rotation de l'agencement de disque de frein, et dans lequel la zone de réception (12) de la bague de friction (2) et la zone de fixation (14) de l'adaptateur de raccordement (4) sont agencées sensiblement sur un plan placé perpendiculairement à l'axe de rotation (X) de l'agencement de disque de frein.

3. Agencement de disque de frein selon l'une des revendications précédentes, dans lequel l'élément de liaison (6 ; 60 ; 160 ; 260) est réalisé sous forme de corps allongé dont l'axe longitudinal (Z) est perpendiculaire à l'axe de rotation (X) de l'agencement de disque de frein.

4. Agencement de disque de frein selon l'une des revendications précédentes, dans lequel l'élément de liaison (6 ; 60) est réalisé au moins partiellement comme un corps cylindrique.

5. Agencement de disque de frein selon l'une des revendications précédentes, dans lequel l'élément de liaison (6 ; 60 ; 160 ; 260) est réalisé au moins partiellement comme un corps qui va en se rétrécissant vers la bague de friction (2).

6. Agencement de disque de frein selon l'une des revendications précédentes, dans lequel l'élément de liaison (60 ; 160 ; 260) est réalisé comme un corps creux.

7. Agencement de disque de frein selon l'une des revendications précédentes, dans lequel l'élément de liaison (160 ; 260) est agencé de telle façon que le ressaut (30 ; 36) s'ouvre vers la bague de friction (2) ou vers l'adaptateur de raccordement (4).

8. Agencement de disque de frein selon l'une des revendications précédentes, dans lequel l'élément de liaison (160 ; 260) comporte deux ressauts (30 ; 36), qui s'étendent depuis les faces frontales opposées de l'élément de liaison (160 ; 260) en pénétration dans celui-ci.

9. Agencement de disque de frein selon l'une des revendications précédentes, dans lequel le tronçon de fond (32) est prévu dans la région de l'élément de liaison (160 ; 260) qui correspond à l'intervalle existant entre la bague de friction (2) et l'adaptateur de raccordement (4), et dans lequel le tronçon de fond (32), vu en direction radiale de l'agencement de disque de frein, recouvre, de préférence au moins partiellement, des zones de bordures respectives de la bague de friction (2) et de l'adaptateur de raccordement (4).

10. Agencement de disque de frein selon l'une des revendications précédentes, dans lequel l'adaptateur de raccordement (4) comporte un évidement radial (20) qui s'étend depuis la périphérie intérieure W de l'adaptateur de raccordement (4) vers sa zone de fixation (14) dans laquelle est fixé l'élément de liaison (6 ; 60 ; 160 ; 260).

11. Agencement de disque de frein selon l'une des revendications précédentes, dans lequel la bague de friction (2) est réalisée comme une bague de friction à ventilation interne, et dans lequel l'espace creux (22) de l'élément de liaison (60 ; 160 ; 260), réalisé sous forme de corps creux, est en communication avec l'espace de circulation (10) de la bague de friction (2).

12. Agencement de disque de frein selon l'une des revendications précédentes, dans lequel l'élément de liaison (6 ; 60 ; 160 ; 260) comprend une zone d'ancrage pourvue de ressauts ou de saillies, afin de constituer un moyen d'engagement avec la zone de fixation (14) de l'adaptateur de raccordement (4).

13. Procédé pour la réalisation d'un agencement de disque de frein pour des freins à disques, en particulier pour des véhicules terrestres, dans lequel une bague de friction (2) et un adaptateur de raccordement (4) sont séparés l'un de l'autre par un intervalle annulaire et sont reliés l'un à l'autre via au moins un élément de liaison (6 ; 60 ; 160 ; 260) dont une extrémité (16) est reçue de manière stationnaire dans une zone de fixation (19) de l'adaptateur de raccordement (4) et dont l'autre extrémité (18) est reçue de manière radialement mobile dans une zone de réception (12) de la bague de friction (2), le procédé comprenant les étapes consistant à :
- réaliser un noyau de coulée,
- agencer le noyau de coulée dans un moule de fonderie de telle façon que l'on forme une première chambre correspondant à la bague de friction (2) et une seconde chambre correspondant à l'adaptateur de raccordement (4),
- agencer au moins un élément de liaison (6 ; 60 ; 160 ; 260) dans un espace qui relie les deux chambres, et dans lequel l'élément de liaison (160 ; 260) comporte au moins un ressaut (30 ; 36) s'étendant en direction de son axe longitudinal (Z), le ressaut sur le terminant dans un tronçon de fond (32) de l'élément de liaison (160 ; 260), et
- remplir du métal en fusion dans le moule de fonderie.
